# EUROPEAN PATENT APPLICATION

(11) **EP 1 097 868 A2**
(43) Date of publication of application: **09.05.2001**
(21) Application number: 00203899.0
(22) Date of filing: 07.11.2000
(51) Int. Cl.: B65B 43/44, B65G 59/10

(54) **METHOD AND APPARATUS FOR DESTACKING STACKS OF PREFORMED CARRIERS**

(30) Priority: 08.11.1999 EP 99203697
(71) Applicant: FPS Food Processing Systems B.V., 2631 RE Nootdorp (NL)
(72) Inventor: Martens, Arnoldus Lambertus Johannes, 5712 SZ Someren (NL); Doornekamp, Martin, 3863 DZ Nijkerk (NL); van de Pol, Gerrit, 6741 AK Lunteren (NL); van Ravenhorst, Barend, 3771 GX Barneveld (NL)
(74) Representative: Prins, Adrianus Willem

(57) **Abstract**

Method for destacking, according to a take-off cycle, stacks of preformed carriers or trays, intended for substantially round products, such as vegetables, fruit or eggs and manufactured from natural material or from plastic, the carriers being successively taken off one by one, said cycle comprising the steps of:
- supplying a stack of nested carriers (3),
- placing said stack on a support member (60),
- inserting, on either side of the stack, separating members (5) between the lowermost carrier and the stack thereabove, said stack thereabove resting on said separating members,
- subsequently engaging the lowermost carrier with engaging members and simultaneously displacing only the lowermost carrier downwards, and
- placing said lowermost carrier on a discharge apparatus (4) for being discharged, whereupon this take-off cycle is repeated. This method involves repeated insertion of the separating members at a different predetermined height for displacing a take-off stack of at least two carriers downwards. The invention also provides an apparatus for destacking such stacks.

## Description

The present invention relates to a method and apparatus for destacking stacks of preformed carriers or trays, intended for substantially round products, such as vegetables, fruit, or eggs and manufactured from natural material or from plastic, the carriers being successively taken off one by one.

In particular, a method for such apparatus comprises the steps of: - supplying a stack of nested carriers,
- placing said stack on a support member,
- inserting, on either side of the stack, separating members between the lowermost carrier and the stack thereabove, said stack thereabove resting on said separating members,
- subsequently engaging the lowermost carrier with engaging members and simultaneously displacing only the lowermost carrier downwards, and
- placing said lowermost carrier on a discharge apparatus for being discharged, whereupon this take-off cycle is repeated.

Such apparatus and method are accurately represented in EP41304 and is incorporated herein by way of reference. Taking off tray by tray and discharging each tray are suitably effected with this apparatus.

Increase in scale in this field of the technique has meant, inter alia, that whereas in the past, only stacks of six trays had to be packaged and transported in boxes, crates or containers, now pallets are used increasingly. On these pallets, layers of stacks as described hereinabove are stacked up to as many as five or six layers.

Generally, this manner of packaging requires further measures to offer sufficient firmness to such towers. Thus, corner sections are for instance used on the corners, and intermediate sheets are used between successive layers. But then, too, the stacks of trays as referred to hereinabove do not always prove to be sufficiently stable. In particular the lowermost trays of each stack often exhibit damages and form changes, due to the pressure from the stacks thereabove.

To overcome the above-outlined shortcoming, the method according to the present invention is characterized by repeatedly inserting the separating members at a different predetermined height for displacing a take-off stack of at least two carriers downwards.

With great advantage, the effect thus achieved is that the lowermost tray is not only substantially reinforced thereby and can hence take up the pressure more properly, but in particular also that no deviant trays have to be used.

In accordance with a further elaboration of the method, it is provided that the uppermost carrier of the take-off stack is also engaged immediately before and during the downward displacement of this take-off stack.

This addition is of great advantage during large-scale automatic processing of stacks of supplied trays, since this prevents, for instance, an uppermost tray of a take-off stack from staying behind and, accordingly, avoids the interruption of the packaging cycle.

A following exemplary embodiment of the method according to the invention provides the repeated insertion of the separating members at a different predetermined height and proceeds according to a second cycle.

In a highly suitable manner, the effect thus achieved is that the entire stacking system acquires a great flexibility, because now, not only the stacking height, but precisely also the height of the take-off stack itself is settable, in principle.

In a particular exemplary embodiment, the second cycle repeats itself after taking off six times, with, for instance, a setting selected for taking off each n-th time a take-off stack of two carriers, with fixed n, and with 1 ≤ n ≤ 6.

The invention also provides an apparatus for effecting these two cycles.

Details and particulars of the apparatus and method according to the present invention will be specified with reference to the following Figures, wherein,
Fig. 1a is a side elevation of the destacker with, indicated schematically therein, the main parts of the apparatus according to the invention for engaging a tray or a take-off stack;
Fig. 1b is a part of an elevation of the section according to I-I in Fig. 1a;
Fig. 2a is a side elevation of a destacker with, indicated schematically therein, the main parts of the apparatus according to the invention during engagement of a tray or a take-off stack;
Fig. 2b is a part of an elevation of the section according to II-II in Fig. 2a;
Fig. 3a is a side elevation of the destacker with, indicated schematically therein, the main parts of the apparatus according to the invention with engaged tray or take-off stack; and
Fig. 3b is a part of an elevation of the section according to III-III in Fig. 3a.

In these Figures, identical parts are designated by the same reference numerals.

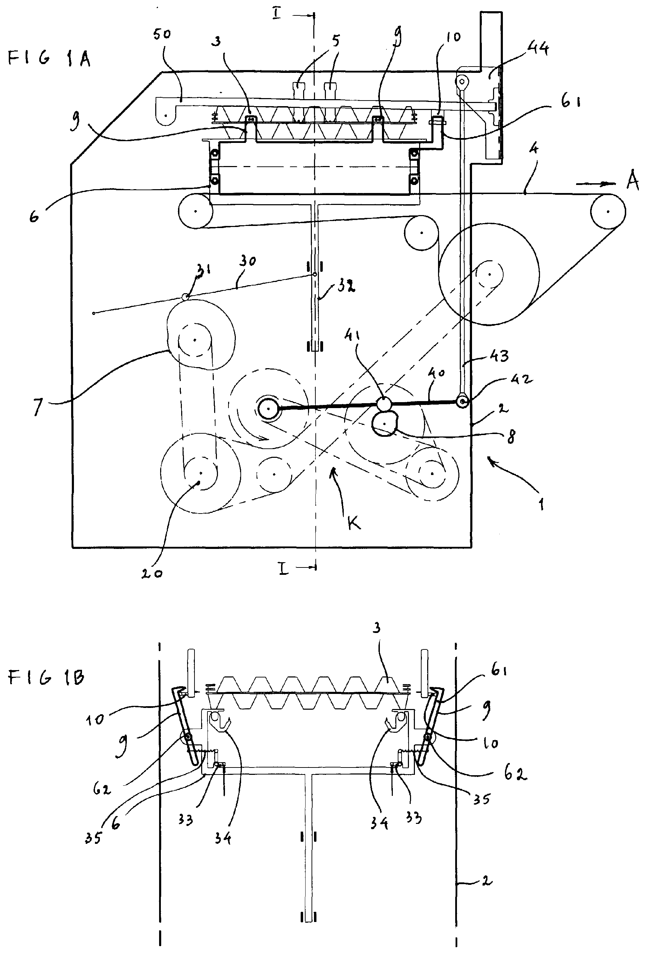

Figs. 1a and 1b, belonging together, indicate schematically, for a tray destacker 1, a case 2 built around all mechanisms for protection, further including a stack of trays 3 disposed on a support member 60, and a discharge apparatus 4, usually a conveyor belt, for discharging the taken-off trays or take-off stack after placement thereon in a direction A for further use. Separating members 5, designed as pairs of prickers and mounted on carriers 50 on both sides of the stack, can be inserted between the trays on either side as separators, while also functioning as support for supporting the trays of which the (two) lowermost one(s) will be handled during a next take-off operation.

The process of each time taking off trays or stacks of trays, hereinafter referred to as take-off stack, which take-off operations constitute a first cycle, is determined by a take-off curve disk 7. For such cycle, the beginning is shown in these Figures. For the successive steps, a cam follower 31 on a cam rod 30 runs over this disk 7, the cam rod 30 being connected to support shaft 32 which, in turn, forms a whole with support member 60. The disk 7 is connected to the main motor 20 of this destacker. From the Figures, it will be clear that each rotation of the disk corresponds to a full up and down movement of the support member 6, and hence the taking-off of a take-off stack from the stack of trays, and subsequently determines the putting down of this take-off stack on discharge apparatus 4.

These Figures further show a pricker 34 which, during each up and down movement, is pricked into a tray at the bottom side, to ensure that this tray is moved along. The coupling of this movement to that of support shaft 32 is not shown, but it will be readily understood by anyone skilled in the art in what manners this can be performed.

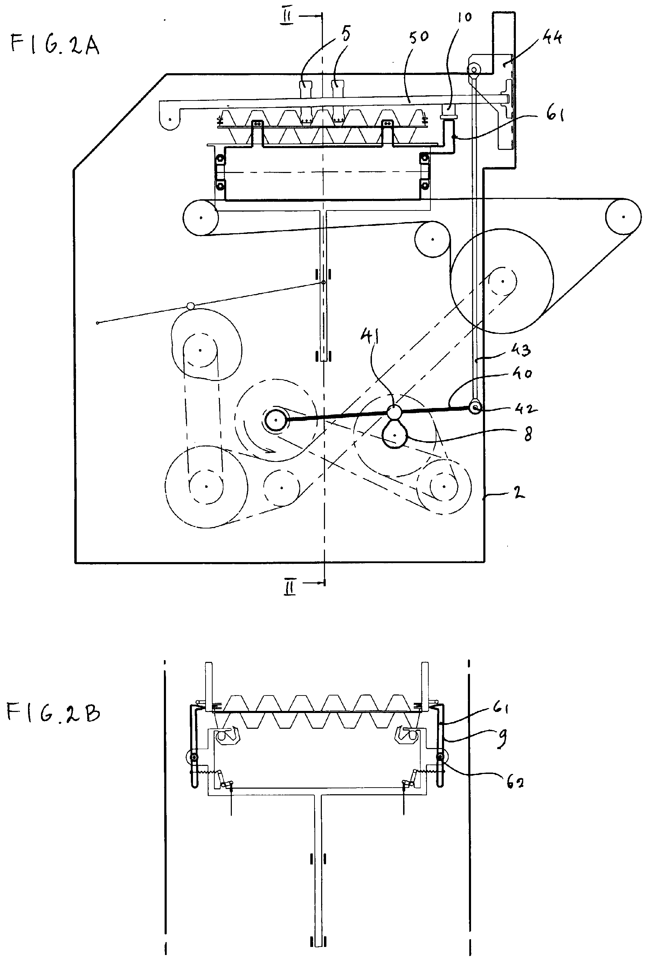

Figs. 2a and 2b, belonging together, again show schematically the destacker during the engaging movement, in this particular case drawn during the taking-off of a take-off stack of two trays. Whereas during the taking-off of in each case a single tray, the movements according to disk 7 may suffice, for the change to a different height for the take-off stack, for instance from one to two, the separating members 5 will have to be moved to an accordingly different height between the trays. This second movement, usually performed at a specific frequency, is determined according to a second cycle with an adjusting curve disk 8. This disk 8 may, for instance, be formed such that after every fifth take-off of a single tray, a take-off stack of two trays is subsequently engaged.

Fig. 2a shows how an adjusting cam follower 41 on an adjusting cam rod 40 is connected to a press rod 43 via a coupling shaft 42, which press rod 43 is in turn connected to the above-mentioned carriers 50 capable of sliding up and down according to a sliding movement of a sliding block 44 in slots, not shown, in the case 2. With this, the insertion height of the separating members 5 can be accurately set and adjusted.

It will be understood by anyone skilled in the art that the coupling and cooperation between the above-mentioned movements is entirely determined by a system of, for instance, chains and gears K.

Fig. 2b further indicates a detainer 10 which is moved up from behind a support plate 61, connected to the support member 6 for rotation about a plate shaft 62, so that on either side, with the action of press springs 35, second engaging members 9 are pricked into the uppermost tray of the take-off stack upon upward movement of support shaft 32, no longer retained by support plate 61, as indicated. The displacement of the engaging members 9 is effected in that rotary hooks 33 are likewise rotated (in the direction of the arrows indicated) during the first cycle, i.e. the take-off cycle, which rotary hooks in turn cause the members 9 to rotate, via the press springs 35. At the same upward movement, the prickers 34 are rotated. The drive mechanism for this is not shown but can be arranged in a known manner. Thus, both the prickers 34 and the second engaging members 9 ensure that the take-off stack is moved along.

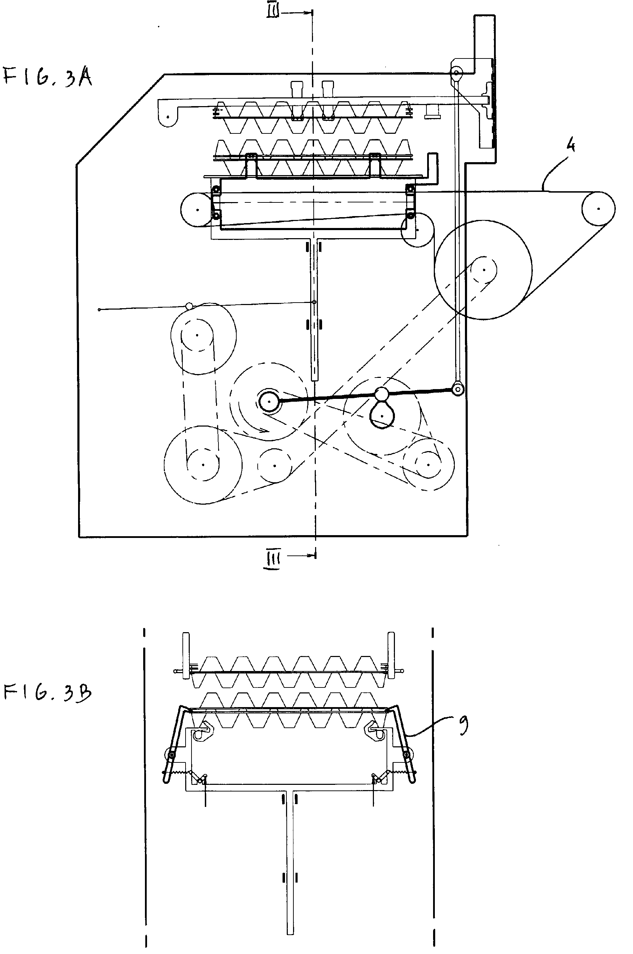

Figs. 3a and 3b show the following step in the first-mentioned cycle, i.e. the downward movement of a single tray or, as drawn here, the downward displacement of the take-off stack of - in this case - two trays and the depositing thereof on the discharge apparatus 4. After this, the two cycles will be repeated.

Figs. 2b and 3b clearly show how the prickers 34 are moved towards the trays and engage in the trays.

A comparison of Figs. 1a, 2a and 3a will immediately make clear how the positions of the curve disks 7 anti 8 determine the positions of the separating members 5 and engaging members 9.

It will be readily understood by anyone skilled in the art that more mechanical embodiments can be conceived which may establish the method according to the present invention. Thus, for instance the uncoupling of disk 8 and the coupling of a handgrip will enable manual setting of the height of the take-off stack. Many frequencies for take-off stacks of several trays, other than the 1/6 mentioned here, can be set at other disks, for instance 1/4.

## Claims

1. A method for destacking, according to a take-off cycle, stacks of preformed carriers or trays, intended for substantially round products, such as vegetables, fruit or eggs and manufactured from natural material or from plastic, the carriers being successively taken off one by one, said cycle comprising the steps of:
- supplying a stack of nested carriers,
- placing said stack on a support member,
- inserting, on either side of the stack, separating members between the lowermost carrier and the stack thereabove, said stack thereabove resting on said separating members,
- subsequently engaging the lowermost carrier with engaging members and simultaneously displacing only the lowermost carrier downwards, and
- placing said lowermost carrier on a discharge apparatus for being discharged, whereupon this take-off cycle is repeated, further **characterized by** the repeated insertion of the separating members at a different predetermined height for displacing a take-off stack of at least two carriers downwards.

2. A method according to claim 1, **characterized in that** the uppermost carrier of the take-off stack is likewise engaged immediately before and during the downward displacement of said take-off stack.

3. A method according to claim 1 or 2, **characterized in that** the repeated insertion of the separating members proceeds at a different predetermined height according to a second cycle.

4. A method according to claim 3, **characterized in that** after six times taking off, the second cycle repeats itself and provides that each n-th time, a take-off stack of two carriers is taken off, with fixed n, and with 1 ≤ n ≤ 6.

5. An apparatus for destacking stacks of preformed carriers or trays intended for substantially round products, such as vegetables, fruit or eggs and manufactured from natural material or from plastic, the carriers being successively taken off one by one in a take-off cycle, the apparatus comprising:
- a support for supporting a stack of nested carriers;
- separating members mounted on either side on arms and accordingly inserted at least on either side between the lowermost carrier and the stack thereabove, said separating members supporting said stack thereabove during destacking;
- engaging members arranged on the support for engaging the lowermost carrier on either side from an engagement position; and
- a displacement apparatus for displacing the lowermost carrier, engaged by the engaging member, only downwards to and onto a discharge apparatus to be subsequently moved back into the engagement position, the discharge apparatus discharging said lowermost carrier and the take-off cycle being repeated, further **characterized by** a further adjusting apparatus which inserts the separating members at a different predetermined height for displacing a take-off stack of at least two carriers downwards.

6. An apparatus according to claim 5, **characterized in that** the adjusting apparatus consists of an adjusting curve disk connected, via an adjusting cam follower on an adjusting cam rod and via a coupling shaft, to a vertically extending press rod for, prior to inserting, moving the separating members upwards, the shape of the adjusting curve disk determining a second cycle.

7. An apparatus according to claim 6, **characterized in that** the adjusting apparatus further comprises, on either side thereof, support plates connected to the separating members, said plates during upward movement being pulled from behind engaging members, said engaging members being on either side connected to the support member by means of rotary hooks and press springs, the engaging members being rotated and engaging in the uppermost tray of the take-off stack.

8. An apparatus according to claims 5 and 6, **characterized in that** the adjusting apparatus comprises a handgrip for manually adjusting the height of the separating members.
